# FASCICULE DE BREVET EUROPEEN

(11) **EP 4 015 368 B1**
(45) Date de publication et mention de la délivrance du brevet: **09.08.2023**
(21) Numéro de dépôt: 21214422.4
(22) Date de dépôt: 14.12.2021
(51) Int. Cl.: B64C 13/04, B64C 13/12, G05G 9/047, G05G 11/00

(54) **DISPOSITIF DE PILOTAGE D'UN AÉRONEF ET PROCÉDÉ ASSOCIÉ**
VORRICHTUNG ZUM STEUERN EINES LUFTFAHRZEUGS UND ENTSPRECHENDES VERFAHREN
DEVICE FOR CONTROLLING AN AIRCRAFT AND ASSOCIATED METHOD

(30) Priorité: 15.12.2020 FR 2013258
(43) Date de publication de la demande: 22.06.2022
(73) Titulaire: Dassault Aviation, 75008 Paris (FR)
(72) Inventeur: COCKENPOT, Fabien, 92214 SAINT CLOUD (FR); PINEAU, François, 92214 SAINT CLOUD (FR); LE BORLOCH, Jérôme, 92214 SAINT CLOUD (FR)
(74) Mandataire: Lavoix

(56) Documents cités:
- EP-A1- 0 204 598
- FR-A1- 2 888 009
- FR-A1- 2 963 318

## Description

La présente invention concerne un dispositif de pilotage d'un aéronef du type comprenant un premier manche et un deuxième manche montés chacun sur un support, chaque manche étant déplaçable par rapport au support entre une pluralité de positions autour d'une position neutre selon au moins un degré de liberté, chaque manche étant configurable entre une configuration pilotante dans laquelle ledit manche est apte à piloter l'aéronef en envoyant une commande de trajectoire à une centrale de pilotage et une configuration non-pilotante dans laquelle aucune commande de trajectoire provenant dudit manche n'est prise en compte par la centrale de pilotage, le dispositif de pilotage comprenant, en outre, un module de sélection de priorité configuré pour basculer le premier manche entre la configuration pilotante et la configuration non-pilotante, le module de sélection étant configuré pour basculer le deuxième manche en configuration non-pilotante lorsque le premier manche est en configuration pilotante et en configuration pilotante lorsque le premier manche est en configuration non-pilotante.

Le document FR 2 963 318 A1 décrit un système de commande d'avion.

Le document FR 2 888 009 A1 décrit un dispositif de commande permettant de placer des organes commandés dans des positions souhaitées.

Le document EP 0 204 598 A1 décrit un dispositif pour la commande d'éléments d'une machine.

Un tel dispositif de pilotage est destiné à faciliter le pilotage de l'aéronef en permettant à un premier pilote, maître du premier manche, et/ou à un deuxième pilote, maître du second manche, de contrôler l'aéronef. Dans un tel dispositif de pilotage, les deux manches permettent par exemple au premier pilote et au deuxième pilote d'envoyer simultanément des commandes de trajectoire à destination d'une centrale de vol. La centrale de vol effectue alors une somme des commandes de trajectoire qu'elle reçoit. Cette somme peut être une somme simple des commandes, ou une somme pondérée en fonction d'une priorisation des commandes de trajectoire envoyée au choix par le premier pilote ou par le deuxième pilote, en fonction de celui qui est le pilote en fonction.

Toutefois, avec un tel dispositif de pilotage, le premier pilote, par exemple, le pilote en fonction, ne reçoit pas d'informations directes sur les commandes de trajectoire envoyées par le deuxième pilote et inversement. Le deuxième pilote ne peut qu'estimer lesdites commandes de trajectoire en visualisant, par exemple, les instruments de bords de l'aéronef.

Ainsi, un tel dispositif de pilotage n'offre pas au deuxième pilote un aperçu précis des commandes de trajectoire envoyées par le premier pilote et inversement. Le deuxième pilote ne peut donc réagir aux commandes de trajectoire qu'après un certain temps de réaction, représentatif du temps nécessaire pour qu'il estime lesdites commandes de trajectoire. Ceci peut être une difficulté, notamment lorsque le deuxième pilote devient pilote en fonction, en remplacement du premier pilote.

Un but de l'invention est de pallier ces inconvénients en proposant un dispositif de pilotage permettant une coopération précise et efficace entre deux pilotes d'un même aéronef.
A cet effet, l'invention a pour objet un dispositif de pilotage du type précité comprenant, en outre :
- un système de détection de la position du premier manche et de la position du deuxième manche ;
- un premier système d'actionnement configuré pour engendrer une première force sur le premier manche selon le degré de liberté ;
- un deuxième système d'actionnement configuré pour engendrer une deuxième force sur le deuxième manche selon le degré de liberté ; et
- un module de commande configuré pour commander le système d'actionnement du manche en configuration non-pilotante de sorte que la position dudit manche en configuration non-pilotante et la position du manche en configuration pilotante soient identiques.

Le dispositif selon l'invention peut comprendre l'une ou plusieurs des caractéristiques suivantes, prise(s) isolément ou suivant toute combinaison techniquement envisageable :
- le dispositif de pilotage comprend au moins un système de contrôle du module de sélection, le système de contrôle étant configuré pour être actionné par un pilote pour contrôler le module de sélection de sorte à basculer le premier manche entre la configuration pilotante et la configuration non-pilotante ;
- le système de contrôle comprend un élément de contrôle commun, placé sur un panneau de contrôle d'un cockpit de l'aéronef ;
- l'élément de contrôle commun est un bouton commun, le module de sélection étant configuré pour changer la configuration du premier manche depuis l'une entre sa configuration pilotante et sa configuration non-pilotante vers l'autre lorsque le bouton commun est sélectionné par un pilote ;
- le système de contrôle comprend, en outre, au moins deux éléments de contrôle individuels, chaque manche comprenant un élément de contrôle individuel ;
- chaque élément de contrôle individuel est un bouton individuel, le module de sélection étant configuré pour passer le premier manche dans sa configuration pilotante lorsque le bouton individuel du premier manche est sélectionné par un pilote ;
- le module de sélection est configuré pour passer le premier manche dans sa configuration pilotante lorsque le bouton individuel du premier manche est maintenu appuyé par un pilote, le module de sélection étant, en outre, configuré pour passer le premier manche dans sa configuration non-pilotante lorsque le bouton individuel du premier manche est relâché ;
- lorsque le bouton individuel du premier manche est maintenu appuyé par un pilote lors d'une durée supérieure à un seuil de durée, le module de sélection maintient le premier manche dans sa configuration pilotante ;
- le dispositif de pilotage comprend un système d'indication de priorité configuré pour émettre un signal représentatif de la configuration d'au moins un manche parmi le premier manche et le deuxième manche ;
- le système d'indication comprend au moins un voyant lumineux, le signal étant un signal lumineux visible par un pilote et indiquant la configuration actuelle d'au moins un manche parmi le premier manche et le deuxième manche ; et
- le système d'indication comprend, en outre, un vibreur, le signal étant une vibration sensible par un pilote et indiquant que la configuration de chaque manche a été changée.

L'invention a également pour objet un procédé de pilotage d'un aéronef à l'aide d'un dispositif de pilotage tel que décrit ci-dessus, le procédé comprenant les étapes de :
- configuration du premier manche dans la configuration pilotante et du deuxième manche dans la configuration non-pilotante par le module de sélection,
- déplacement du premier manche selon le degré de liberté par un pilote ; et
- commande du deuxième système d'actionnement par le module de commande pour engendrer une deuxième force sur le deuxième manche selon le degré de liberté de sorte que la position du deuxième manche et la position du premier manche soient identiques.

Le procédé selon l'invention peut également comprendre l'une ou plusieurs des caractéristiques suivantes, prise(s) isolément ou suivant toute combinaison techniquement envisageable :
- le dispositif de pilotage comprend un système de contrôle du module de sélection, le système de contrôle étant configuré pour être actionné par un pilote pour contrôler le module de sélection de sorte à basculer le premier manche entre la configuration pilotante et la configuration non-pilotante, le procédé comprenant une étape préalable d'actionnement du système de contrôle par un pilote pour passer le premier manche en configuration pilotante et le deuxième manche en configuration non-pilotante ;
- le système de contrôle comprend un élément de contrôle commun, l'élément de contrôle commun étant un bouton commun, le module de sélection passant le premier manche depuis l'une entre sa configuration pilotante et sa configuration non-pilotante vers l'autre lorsque le bouton commun est sélectionné par un pilote ;
- le système de contrôle comprend au moins deux éléments de contrôle individuels, chaque manche comprenant un élément de contrôle individuel, chaque élément de contrôle individuel étant un bouton individuel, le module de sélection passant le premier manche dans sa configuration pilotante lorsque le bouton individuel du premier manche est maintenu appuyé par un pilote, le module de sélection passant le premier manche dans sa configuration non-pilotante lorsque le bouton individuel du premier manche est relâché ; et
- le système de contrôle comprend au moins deux éléments de contrôle individuels, chaque manche comprenant un élément de contrôle individuel, chaque élément de contrôle individuel étant un bouton individuel, le module de sélection passant le premier manche dans sa configuration pilotante lorsque le bouton individuel du premier manche est maintenu appuyé par un pilote lors d'une durée supérieure à un seuil de durée.

L'invention sera mieux comprise à la lecture de la description qui va suivre donnée uniquement à titre d'exemple, et faite en se référant aux dessins annexés, sur lesquels :
- la figure 1 est une vue schématique en plan d'un cockpit d'un aéronef dans lequel est implémenté un dispositif de pilotage selon l'invention ;
- la figure 2 est une représentation schématique du dispositif de pilotage selon l'invention ;
- la figure 3 est une vue en perspective de trois-quarts face d'une partie du dispositif de pilotage selon l'invention, incluant un manche et un support sur lequel est monté ledit manche, le manche comprenant un élément de contrôle individuel ;
- la figure 4 est une représentation schématique d'une partie du dispositif de pilotage, incluant un module de sélection de priorité, un élément de contrôle commun du module de sélection de priorité et un élément d'indication commun lumineux, l'élément d'indication commun lumineux émettant un signal lumineux indiquant que le premier manche est en configuration pilotante et le deuxième manche est en configuration non-pilotante ;
- la figure 5 est une représentation schématique similaire à celle de la figure 4, à l'exception que l'élément d'indication commun lumineux émet un signal lumineux indiquant que le premier manche est en configuration non-pilotante et que le deuxième manche est en configuration pilotante ;
- la figure 6 est une représentation schématique d'une partie du dispositif de pilotage, incluant un module de sélection de priorité, un système de contrôle du module de sélection de priorité et deux éléments d'indication individuel lumineux, chaque élément d'indication individuel lumineux émettant un signal lumineux indiquant que le premier manche est en configuration pilotante et le deuxième manche est en configuration non-pilotante ; et
- la figure 7 est une représentation schématique similaire à celle de la figure 6, à l'exception que chaque élément d'indication individuel lumineux émet un signal lumineux indiquant que le premier manche est en configuration non-pilotante et que le deuxième manche est en configuration pilotante.

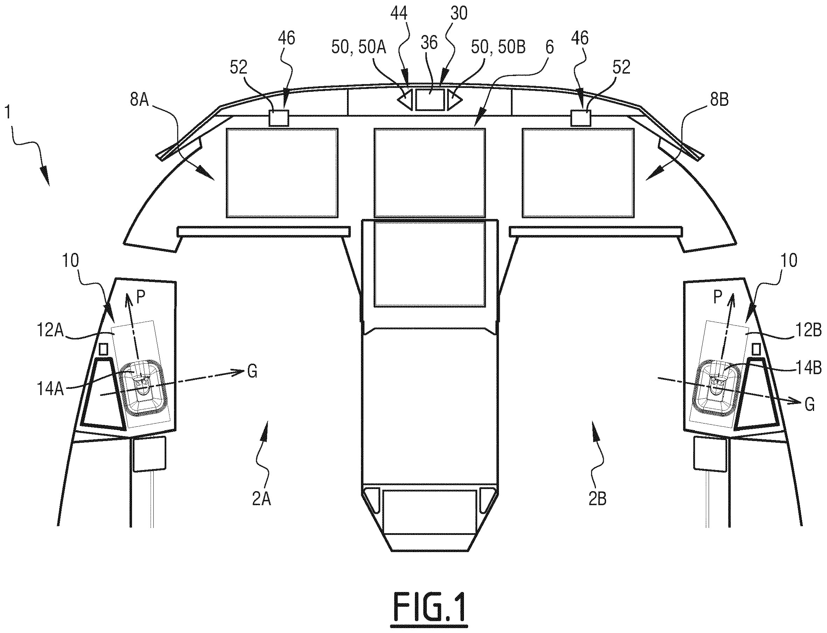

En référence à la figure 1, on décrit un cockpit 1 d'un aéronef. Le cockpit 1 comprend un premier poste de pilotage 2A et une deuxième poste de pilotage 2B.

Le premier poste de pilotage 2A est destiné à accueillir un premier pilote de l'aéronef, par exemple le commandant de bord. Le deuxième poste de pilotage 2B est destiné à accueillir un deuxième pilote de l'aéronef, par exemple le copilote.

Le cockpit 1 comprend un panneau de contrôle 6. Le panneau de contrôle 6 comprend des éléments accessibles et actionnables par les pilotes pour piloter l'aéronef. Ces éléments sont classiques et ne seront pas décrits en détail ici.

Le cockpit 1 comprend, en outre, au moins deux panneaux d'affichage 8. Chaque panneau d'affichage est configuré pour afficher des informations de vol à destination d'un pilote. Un premier panneau d'affichage 8A est situé dans le premier poste de pilotage 2A et est configuré pour afficher des informations de vol à destination du premier pilote. Un deuxième panneau d'affichage 8B est situé dans le deuxième poste de pilotage 2B et est configuré pour afficher des informations de vol à destination du deuxième pilote.

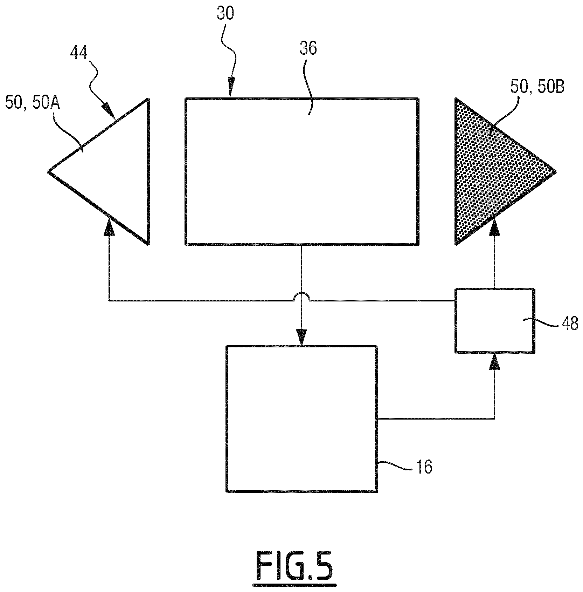

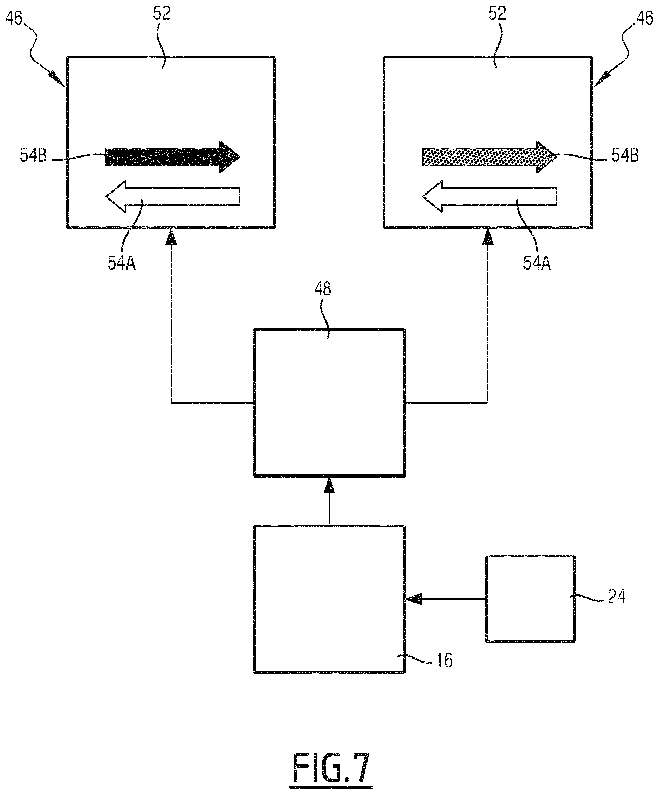

Dans la suite, en référence aux figures 1 à 7, on décrit un dispositif de pilotage 10 d'un aéronef. Un tel dispositif de pilotage 10 est destiné à être installé dans le cockpit 1 de l'aéronef tel qu'illustré sur la figure 1.

Le dispositif de pilotage 10 est destiné à permettre au premier pilote ou au deuxième pilote de piloter l'aéronef en actionnant des surfaces mobiles de commande de l'aéronef pour engendrer une commande en tangage ou en roulis.

Le dispositif de pilotage 10 comprend un premier support 12A situé dans le premier poste de pilotage 2A et un deuxième support 12B situé dans le deuxième poste de pilotage 2B.

Le dispositif de pilotage 10 comprend, en outre, un premier manche 14A monté sur le premier support 12A et un deuxième manche 14B monté sur le deuxième support 12B.

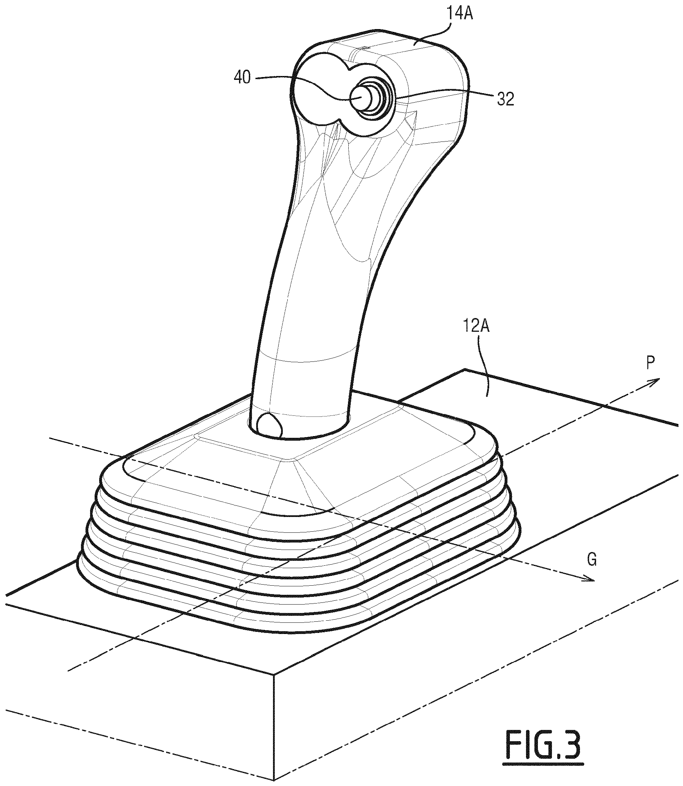

La figure 3 illustre un exemple de manche 14A, 14B monté sur un support 12A, 12B. La figure 3 illustre en particulier un manche 14A monté sur un support 12A.

Chaque manche 14A, 14B est monté mobile sur le support 12A, 12B correspondant entre une pluralité de positions autour d'une position neutre selon au moins un degré de liberté.

Dans ce qui suit, on décrit une application du dispositif de pilotage 10 pour la commande d'organes commandés de l'aéronef.

Les organes commandés sont, par exemple, des gouvernes de l'aéronef, la commande étant effectuée par l'intermédiaire de servocommandes. Les gouvernes sont, par exemple des ailerons de l'aéronef pour la commande en roulis et un gouvernail de profondeur de l'aéronef pour la commande en tangage. Ces gouvernes forment des surfaces mobiles de commande.

Le nombre de degrés de liberté est par exemple de deux. Chaque degré de liberté présente une position de neutre. Le premier degré de liberté est par exemple défini selon une direction longitudinale P correspondant à la profondeur. Le deuxième degré de liberté est, par exemple, défini selon une direction transversale G perpendiculaire à la direction longitudinale, correspondant au gauchissement.

Le premier degré de liberté correspond, par exemple, à une commande sur un axe de profondeur de l'aéronef. Un déplacement du manche 14A, 14B vers l'avant de l'aéronef correspond par exemple à une commande de plongée du nez de l'aéronef. Un déplacement du manche 14A, 14B vers l'arrière correspond, par exemple à une commande de redressement du nez de l'aéronef.

Le deuxième degré de liberté correspond, par exemple, à une commande sur un axe de gauchissement de l'aéronef. Un déplacement du manche 14A, 14B vers la droite de l'aéronef correspond par exemple à une commande d'inclinaison vers la droite de l'aéronef. Un déplacement du manche 14A, 14B vers la gauche correspond, par exemple à une commande d'inclinaison vers la gauche de l'aéronef.

La commande de l'aéronef est donc réalisée par déplacement du manche 14A, 14B selon au moins un degré de liberté par un pilote.

Dans la suite, on considère que le premier manche 14A est destiné à être contrôlé par le premier pilote, et le deuxième manche 14B est destiné à être contrôlé par le deuxième pilote.

Chaque manche 14A, 14B est configurable entre une configuration pilotante et une configuration non-pilotante.

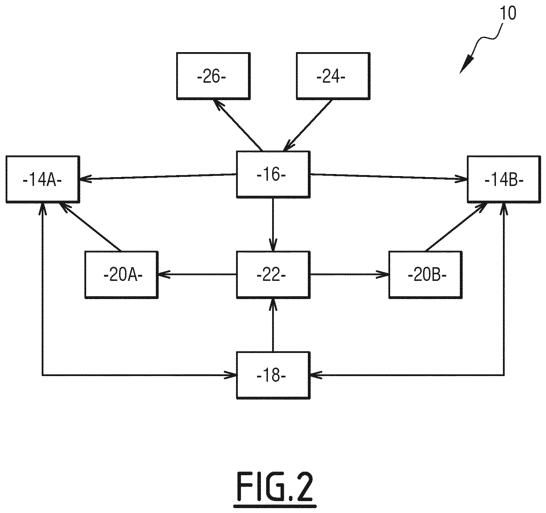

En référence à la figure 2, le dispositif de pilotage 10 comprend, en outre, un module 16 de sélection de priorité configuré pour basculer chaque manche 14A, 14B entre la configuration pilotante et la configuration non-pilotante et un système 18 de détection de la position du premier manche 14A et de la position du deuxième manche 14B.

Le dispositif de pilotage 10 comprend, en outre, un système 24 de contrôle du module de sélection 16 par un pilote et un système 26 d'indication de priorité.

Le dispositif de pilotage 10 comprend, en outre, un premier système d'actionnement 20A de déplacement du premier manche 14A, un deuxième système d'actionnement 20B de déplacement du deuxième manche 14B et un module 22 de commande des premier et deuxième systèmes d'actionnement 20A, 20B.

Dans la configuration pilotante d'un des manches 14A, 14B, l'autre manche 14B, 14A étant dans une configuration non-pilotante, le manche 14A, 14B dans la configuration pilotante est apte à piloter l'aéronef en envoyant une commande de trajectoire à une centrale de pilotage de l'aéronef. Dans la configuration non-pilotante d'un des manches 14A, 14B, l'autre manche 14B, 14A étant dans une configuration pilotante, aucune commande de trajectoire provenant dudit manche 14A, 14B dans la configuration non-pilotante n'est prise en compte par la centrale de pilotage.

Lorsque le premier manche 14A, respectivement le deuxième manche 14B, est en configuration pilotante, le premier pilote, respectivement le deuxième pilote, est appelé « pilote en fonction ». Il pilote l'aéronef par l'intermédiaire du premier manche 14A, respectivement du deuxième manche 14B.

Lorsque le premier manche 14A, respectivement le deuxième manche 14B, est en configuration non-pilotante, le premier pilote, respectivement le deuxième pilote, est appelé « pilote non en fonction ». Aucune commande de trajectoire provenant du premier manche 14A, respectivement du deuxième manche 14B n'est prise en compte par la centrale de pilotage.

Le module de sélection 16 est connecté à chacun des premier et deuxième manches 14A, 14B.

Le module de sélection 16 est configuré pour faire basculer le premier manche 14A entre la configuration pilotante et la configuration non-pilotante sur la base en particulier d'une commande reçue d'un pilote via le système de contrôle 24. Le module de sélection 16 est, en outre, configuré pour faire basculer le deuxième manche 14B en configuration non-pilotante lorsque le premier manche 14A est en configuration pilotante et en configuration pilotante lorsque le premier manche 14A est en configuration non-pilotante.

De manière symétrique, le module de sélection 16 est configuré pour faire basculer le deuxième manche 14B entre la configuration pilotante et la configuration non-pilotante. Le module de sélection 16 est, en outre, configuré pour commander le premier manche 14A en configuration non-pilotante lorsque le deuxième manche 14B est en configuration pilotante et en configuration pilotante lorsque le deuxième manche 14B est en configuration non-pilotante.

De la sorte, un seul pilote, parmi le premier pilote et le deuxième pilote, pilote l'aéronef de manière exclusive par l'intermédiaire du manche 14A, 14B qui lui est associé. En d'autres termes, seul le premier pilote, ou seul le deuxième pilote, pilote l'aéronef par l'intermédiaire, respectivement, de son manche 14A ou de son manche 14B.

Le module de sélection 16 est, en outre, configuré pour générer une donnée de sélection représentative du manche 14A, 14B en configuration pilotante. La donnée de sélection est indicatrice de l'identité du manche 14A, 14B en configuration pilotante.

Le module de sélection 16 comporte par exemple un module logiciel au sein d'au moins un calculateur comportant une mémoire propre à recevoir le module et un processeur propre à exécuter le module logiciel stocké dans ladite mémoire.

Le système de détection 18 est connecté à chaque manche 14A, 14B. Il est configuré pour générer une première donnée de position représentative de la position du premier manche 14A et une deuxième donnée de position représentative de la position du deuxième manche 14B.

La première donnée de position est représentative de la position du premier manche 14A selon chaque degré de liberté. La deuxième donnée de position est représentative de la position du deuxième manche 14B selon chaque degré de liberté.

Le système de détection 18 comprend un premier capteur de position (non-illustré) configuré pour générer la première donnée de position et un deuxième capteur de position (non-illustré) configuré pour générer la deuxième donnée de position.

Les données de position du manche en configuration pilotante sont, par exemple, envoyées à la centrale de pilotage de l'aéronef. Les surfaces mobiles de l'aéronef sont commandées en fonction de ces données de positions.

Le premier système d'actionnement 20A est configuré pour déplacer le premier manche 14A selon chaque degré de liberté. En particulier, le premier système d'actionnement 20A est configuré pour engendrer une première force sur le premier manche 14A selon chaque degré de liberté. Le premier système d'actionnement 20A comprend un actionneur (non-illustré) pour chaque degré de liberté. Chaque actionneur du premier système d'actionnement 20A est configuré pour déplacer le premier manche 14A selon le degré de liberté associé. Pour ce faire, chaque actionneur du premier système d'actionnement 20A applique une première force sur le premier manche 14A selon le degré de liberté associé. Ceci modifie la loi effort/déplacement.

Le deuxième système d'actionnement 20B est configuré pour déplacer le deuxième manche 14B selon chaque degré de liberté. En particulier, le deuxième système d'actionnement 20B est configuré pour engendrer une deuxième force sur le deuxième manche 14B selon chaque degré de liberté. Le deuxième système d'actionnement 20B comprend un actionneur (non-illustré) pour chaque degré de liberté. Chaque actionneur du deuxième système d'actionnement 20B est configuré pour déplacer le deuxième manche 14B selon le degré de liberté associé. Pour ce faire, chaque actionneur du deuxième système d'actionnement 20B applique une deuxième force sur le deuxième manche 14B selon le degré de liberté associé. Ceci modifie la loi effort/déplacement.

Le module de commande 22 est connecté au module de sélection 16, au système de détection 18 et aux premier et deuxième systèmes d'actionnement 20A, 20B. Le module de commande 22 reçoit depuis le module de sélection 16 la donnée de sélection et depuis le système de détection 18 la première donnée de position et la deuxième donnée de position.

A partir de la donnée de sélection, le module de commande 22 est configuré pour déduire quel manche 14A, 14B est en configuration pilotante et quel manche 14A, 14B est en configuration non-pilotante.

A partir de la première donnée de position et de la deuxième donnée de position, le module de commande 22 est configuré pour déduire la position du premier manche 14A et du deuxième manche 14B selon chaque degré de liberté.

Le module de commande 22 est, en outre, configuré pour commander le système d'actionnement 20A, 20B du manche 14A, 14B en configuration non-pilotante de sorte que la position dudit manche 14A, 14B en configuration non-pilotante et la position du manche 14A, 14B en configuration pilotante soient identiques, selon chaque degré de liberté. Par exemple, lorsque le premier manche 14A est en position pilotante alors le deuxième manche 14B est en position non-pilotante. Le module de commande 22 commande alors le deuxième système d'actionnement 20B de sorte que la position du deuxième manche 14B et la position du premier manche 14A soient identiques, selon chaque degré de liberté. Selon un autre exemple, lorsque le deuxième manche 14B est en position pilotante alors le premier manche 14A est en position non-pilotante. Le module de commande 22 commande alors le premier système d'actionnement 20A de sorte que la position du premier manche 14A et la position du deuxième manche 14B soient identiques, selon chaque degré de liberté.

Le module de commande 22 est par exemple un module logiciel propre à être exécuté par le processeur d'un calculateur du dispositif de pilotage 10.

Le système de contrôle 24 est connecté au module de sélection 16. Il est configuré pour être actionné par un pilote pour contrôler le module de sélection 16 de sorte à commander, par exemple, le premier manche 14A ou le deuxième manche 14B entre la configuration pilotante et la configuration non-pilotante.

Le système de contrôle 24 comprend, par exemple, au moins un élément de contrôle commun 30 (visible sur les figures 1, 4 et 5) et au moins deux éléments de contrôle individuels 32 (un élément de contrôle individuel 32 est visible sur la figure 3).

Comme illustré sur la figure 1, l'élément de contrôle commun 30 est, par exemple, placé sur le panneau de contrôle 6 du cockpit 1 de l'aéronef. L'élément de contrôle commun 30 est, par exemple un bouton commun 36. Le bouton 36 est, par exemple, un bouton physique ou/et un bouton logiciel affiché sur un écran du dispositif de pilotage 10.

Le module de sélection 16 est, par exemple, configuré pour changer la configuration du premier manche 14A depuis l'une entre sa configuration pilotante et sa configuration non-pilotante dans laquelle il se trouve vers l'autre lorsque le bouton commun 36 est sélectionné par un pilote. Par exemple, le module de sélection 16 est configuré pour changer la configuration du premier manche 14A dès lors que le bouton commun 36 est appuyé par un pilote.

Chaque manche 14A, 14B comprend, par exemple, un élément de contrôle individuel 32.

Comme illustré sur la figure 3, l'élément de contrôle individuel 32 est, par exemple, un bouton individuel 40 porté par le manche 14A, 14B.

Le module de sélection 16 est, par exemple, configuré pour passer le premier manche 14A dans sa configuration pilotante lorsque le bouton individuel 40 du premier manche 14A est sélectionné par le premier pilote, maître du premier manche 14A.

Après passage du premier manche 14A dans sa configuration pilotante, lorsque le bouton individuel 40 du premier manche 14A est maintenu appuyé par le premier pilote pendant d'une durée supérieure à un seuil de durée, le module de sélection 16 maintient le premier manche 14A dans sa configuration pilotante, même si le bouton individuel 40 est relâché. Le seuil de durée est, par exemple, supérieur à 1 seconde, notamment supérieur à 5 secondes.

Au contraire, si le bouton individuel 40 est maintenu appuyé pendant une durée inférieure au seuil de durée, le module de sélection 16 ne bascule pas le premier manche 14A dans sa configuration pilotante ou maintient le premier manche 14A dans la configuration pilotante uniquement tant que le bouton individuel 40 est maintenu appuyé. Ce dernier cas permet par exemple d'effectuer une brève correction de trajectoire.

De manière analogue, le module de sélection 16 est configuré pour passer le deuxième manche 14B dans sa configuration pilotante lorsque le bouton individuel 40 du deuxième manche 14B est sélectionné par le deuxième pilote, maître du deuxième manche 14B.

Après passage du deuxième manche 14B dans sa configuration pilotante, lorsque le bouton individuel 40 du deuxième manche 14B est maintenu appuyé par le deuxième pilote pendant d'une durée supérieure à un seuil de durée, le module de sélection 16 maintient le deuxième manche 14B dans sa configuration pilotante, même si le bouton individuel 40 est relâché. Le seuil de durée est, par exemple, supérieur à 1 seconde, notamment supérieur à 5 secondes.

Au contraire, si le bouton individuel 40 est maintenu appuyé pendant une durée inférieure au seuil de durée, le module de sélection 16 ne bascule pas deuxième manche 14B dans sa configuration pilotante ou maintient deuxième manche 14B dans la configuration pilotante uniquement tant que le bouton individuel 40 est maintenu appuyé. Ce dernier cas permet par exemple d'effectuer une brève correction de trajectoire.

Pour éviter les conflits entre, par exemple, des actionnements d'éléments de contrôles distincts, le module de sélection 16 est, en outre, configuré pour tenir compte de l'actionnement le plus récent chronologiquement.

Ainsi, si plusieurs éléments entre l'élément de contrôle commun 30 et les éléments de contrôle individuels 32 sont actionnés, le module de sélection 16 ne prend en compte que l'actionnement de l'élément ayant été actionné en dernier, d'un point de vue chronologique.

Le système d'indication 26 est connecté au module de sélection 16. Il est configuré pour émettre un signal représentatif de la configuration d'au moins un manche 14A, 14B parmi le premier manche 14A et le deuxième manche 14B. Le signal indique par exemple la configuration actuelle d'au moins un manche 14A, 14B ou que la configuration actuelle des manches 14A, 14B a été changée.

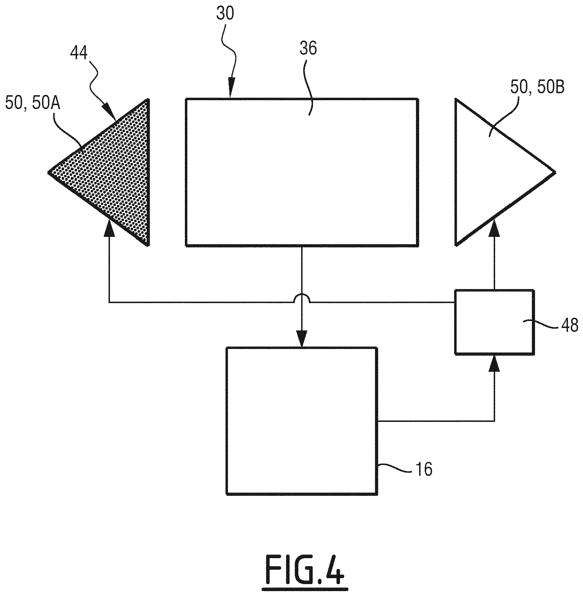

Le système d'indication 26 comprend, par exemple, un élément d'indication commun lumineux 44, deux éléments d'indication individuels lumineux 46, deux éléments d'indication individuels haptiques (non-illustrés) et un contrôleur 48 (illustré sur les figures 4 à 7) des éléments d'indications 44, 46.

Comme illustré sur la figure 1, l'élément d'indication commun lumineux 44 est, par exemple, visible sur le panneau de contrôle 6 du cockpit 1 de l'aéronef. L'élément d'indication commun lumineux 44 est situé de telle sorte qu'il soit visible par les premier et deuxième pilotes.

L'élément d'indication commun lumineux 44 comprend, par exemple, au moins un voyant lumineux commun 50. Le signal est alors un signal lumineux émis par le voyant lumineux commun 50 et visible par un pilote. Le signal lumineux indique, par exemple, la configuration actuelle d'au moins un manche 14A, 14B parmi le premier manche 14A et le deuxième manche 14B.

Comme illustré sur les figure 1, 3 et 4, l'élément d'indication commun lumineux 44 comprend, par exemple, deux voyants lumineux communs 50 situé de part et d'autre du bouton commun 36. Un premier voyant lumineux commun 50A est situé du côté du premier manche 14A, c'est-à-dire du côté de la première portion de pilotage 2A, et un deuxième voyant lumineux commun 50B est situé du côté du deuxième manche 14B c'est-à-dire du côté de la deuxième portion de pilotage 2B.

Comme illustré sur la figure 1, les éléments d'indication individuels lumineux 46 sont, par exemple, visibles chacun sur un panneau d'affichage 8 en particulier sur un écran du panneau d'affichage 8. Chaque élément d'indication individuel lumineux 46 est situé de sorte qu'il soit visible par au moins le pilote placé dans le poste de pilotage 2A, 2B associé.

En référence aux figures 1, 6 et 7, l'élément d'indication individuel lumineux 46 comprend, par exemple, au moins un voyant lumineux individuel 52. Le signal est alors un signal lumineux émis par le voyant lumineux individuel 52 et visible par le pilote. Le signal lumineux indique, par exemple, la configuration actuelle de chaque manche 14A, 14B.

Comme illustré sur les figures 1, 6 et 7, le voyant lumineux individuel 52 de l'élément d'indication individuel comprend un premier pictogramme lumineux 54A et un deuxième pictogramme lumineux 54B.

Le premier pictogramme lumineux 54A présente, par exemple, une forme de flèche pointant vers le premier poste de pilotage 2A. Le deuxième pictogramme lumineux 54B présente, par exemple, une forme de flèche pointant vers le deuxième poste de pilotage 2B.

Chaque pictogramme lumineux 54A, 54B est, par exemple, configuré pour émettre un signal lumineux de couleur verte ou rouge.

En particulier, le premier pictogramme lumineux 54A du premier panneau d'affichage 8A est configuré pour émettre un signal lumineux de couleur verte. Le deuxième pictogramme lumineux 54B du premier panneau d'affichage 8A est configuré pour émettre un signal lumineux de couleur rouge.

En outre, le premier pictogramme lumineux 54A du deuxième panneau d'affichage 8B est configuré pour émettre un signal lumineux de couleur rouge. Le deuxième pictogramme lumineux 54B du deuxième panneau d'affichage 8B est configuré pour émettre un signal lumineux de couleur verte.

Les éléments d'indication individuels haptiques sont, par exemple, chacun respectivement portés par un manche 14A, 14B.

L'élément d'indication individuel haptique comprend, par exemple, un vibreur. Un vibreur est par exemple porté par chacun des manches 14A, 14B. Le signal est alors une vibration émise par le vibreur et sensible par le pilote maître du manche 14A, 14B associé audit vibreur. La vibration indique, par exemple, que la configuration de chaque manche 14A, 14B a été changée.

Le vibreur est, par exemple, configuré pour émettre une vibration lors du passage du manche 14A, 14B associé depuis la configuration pilotante vers la configuration non-pilotante. La vibration est par exemple momentanée et dure, par exemple, entre 0,1 s et 1 s. Cette vibration indique au pilote maître du manche 14A, 14B associé que la configuration de son manche 14A, 14B a été modifiée et qu'elle est désormais non-pilotante.

Le contrôleur 48 est connecté au module de sélection 16 et aux éléments d'indication 44, 46 et aux éléments d'indication individuels haptiques. Il est configuré pour recevoir la donnée de sélection depuis le module de sélection 16. A partir de la donnée de sélection, le contrôleur 48 est configuré pour déduire quel manche 14A, 14B est en configuration pilotante et quel manche 14A, 14B est en configuration non-pilotante. Il est, en outre, configuré pour contrôler les éléments d'indication lumineux 44, 46 et les éléments d'indications individuels haptiques en fonction de la donnée de sélection.

Lorsque la donnée de sélection est une donnée indicatrice que le premier manche 14A est en configuration pilotante, le contrôleur 48 contrôle l'élément d'indication commun lumineux 44 de sorte que celui-ci indique que le premier manche 14A est en configuration pilotante et que le deuxième manche 14B est en configuration non-pilotante. Le premier voyant lumineux commun 50A émet alors un signal lumineux. Le deuxième voyant lumineux commun 50B n'émet alors pas de signal lumineux.

Lorsque la donnée de sélection est une donnée indicatrice que le premier manche 14A est en configuration pilotante, le contrôleur 48 contrôle, en outre, chaque élément d'indication individuel lumineux 46 de sorte que celui-ci indique que le premier manche 14A est en configuration pilotante et que le deuxième manche 14B est en configuration non-pilotante. Le premier pictogramme lumineux 54A émet alors un signal lumineux. Le deuxième pictogramme lumineux 54B n'émet alors pas de signal lumineux.

Lorsque la donnée de sélection est une donnée indicatrice que le deuxième manche 14B est en configuration pilotante, le contrôleur 48 contrôle l'élément d'indication commun lumineux 44 de sorte que celui-ci indique que le premier manche 14A est en configuration non-pilotante et que le deuxième manche 14B est en configuration pilotante. Le premier voyant lumineux commun 50A n'émet alors pas de signal lumineux. Le deuxième voyant lumineux commun 50B émet alors un signal lumineux.

Lorsque la donnée de sélection est une donnée indicatrice que le deuxième manche 14B est en configuration pilotante, le contrôleur 48 contrôle, en outre, chaque élément d'indication individuel lumineux 46 de sorte que celui-ci indique que le premier manche 14A est en configuration non-pilotante et que le deuxième manche 14B est en configuration pilotante. Le premier pictogramme lumineux 54A n'émet alors pas de signal lumineux. Le deuxième pictogramme lumineux 54B émet alors un signal lumineux.

Le contrôleur 48 est configuré, en outre, pour contrôler les premier et deuxième voyants lumineux communs 50A, 50B de sorte que lorsqu'un voyant lumineux commun 50A, 50B parmi les premier et deuxième voyants lumineux communs 50A, 50B émet un signal lumineux, l'autre voyant lumineux commun 50A, 50B parmi les premier et deuxième voyants lumineux communs 50A, 50B n'émet pas de signal lumineux et inversement.

Le contrôleur 48 est configuré, en outre, pour contrôler les premier et deuxième pictogrammes lumineux 54A, 54B de sorte que lorsqu'un pictogramme lumineux 54A, 54B parmi les premier et deuxième pictogrammes lumineux 54A, 54B émet un signal lumineux, l'autre pictogramme lumineux 54A, 54B parmi les premier et deuxième pictogrammes lumineux 54A, 54B n'émet pas de signal lumineux et inversement.

Lorsque la donnée de sélection reçue par le contrôleur 48 change, c'est-à-dire lorsque la configuration des premier et deuxième manches 14A, 14B change, le contrôleur 48 contrôle l'élément d'indication individuel haptique du manche 14A, 14B dont la configuration passe de pilotante à non-pilotante de sorte que celui-ci émette une vibration momentanée.

Dans ce qui suit, on décrit un procédé de pilotage de l'aéronef à l'aide d'un dispositif de pilotage 10 tel que décrit précédemment. Le procédé est décrit du point de vue du premier pilote. Il est entendu que le procédé est similaire du point de vue du deuxième pilote.

Initialement, le pilote actionne le système de contrôle 24 pour passer le premier manche 14A dans sa configuration pilotante.

Si la configuration actuelle du premier manche 14A est non-pilotante, le premier pilote sélectionne, par exemple, le bouton commun 36.

Selon un autre exemple, quelle que soit la configuration actuelle du premier manche 14A, le premier pilote sélectionne le bouton individuel 40 du premier manche 14A. Par exemple, le premier pilote maintient le bouton individuel 40 appuyé lors d'une durée supérieure au seuil de durée.

Le module de sélection 16 configure alors le premier manche 14A dans sa configuration pilotante et le deuxième manche 14B dans sa configuration non-pilotante. Le module de sélection 16 génère, en outre, la donnée de sélection indicatrice que le premier manche 14A est en configuration pilotante.

Comme illustré sur la figure 4, le premier voyant lumineux commun 50A émet alors un signal lumineux. Le deuxième voyant lumineux commun 50B n'émet alors pas de signal lumineux.

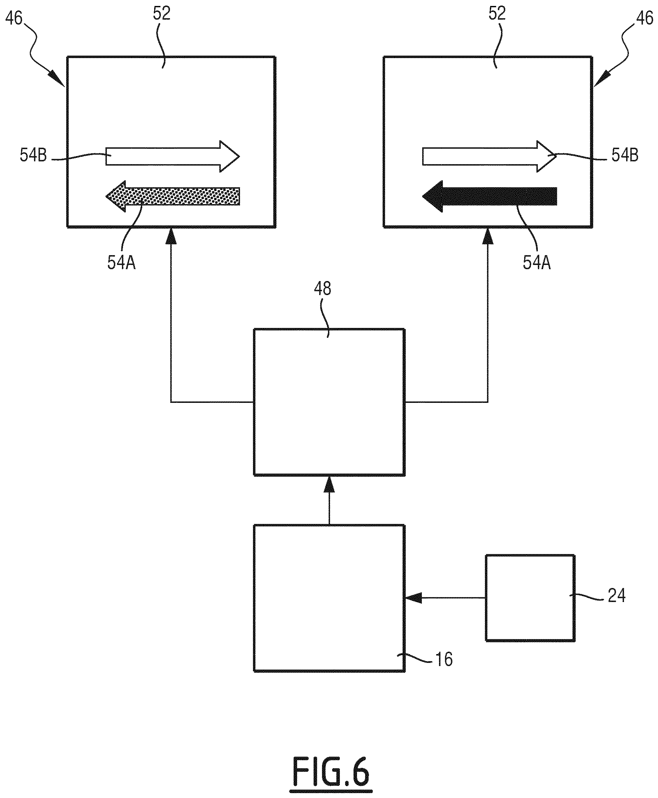

Comme illustré sur la figure 6, les premiers pictogrammes lumineux 54A des voyants lumineux individuels 52 émettent alors un signal lumineux. Les deuxièmes pictogrammes lumineux 54B des voyants lumineux individuels 52 n'émettent alors pas de signal lumineux.

Lors de la configuration du manche 14A vers la configuration pilotante, le vibreur du manche 14B émet une vibration.

Par la suite, le premier manche 14A est déplacé selon au moins un degré de liberté par le premier pilote pour commander l'aéronef. Les données de position du premier manche 14A sont alors utilisées pour actionner les surfaces mobiles de commande de l'aéronef.

Le système de détection 18 génère alors la première donnée de position et la deuxième donnée de position.

Le module de commande 22 reçoit la donnée de sélection depuis le module de sélection 16 et les première et deuxième données de position depuis le système de détection 18.

Le module de commande 22 commande le système d'actionnement 20A, 20B du manche 14A, 14B en configuration non-pilotante en fonction de la donnée de sélection. Le module de commande 22 commande donc ici le deuxième système d'actionnement 20B pour déplacer le deuxième manche 14B, qui est dans cet exemple en configuration non-pilotante, selon chaque degré de liberté de sorte que la position du deuxième manche 14B par rapport à sa position de neutre et la position du premier manche 14A par rapport à sa position de neutre soient identiques selon chaque degré de liberté.

Selon un autre mode de réalisation, le module de sélection 16 ne maintient pas le premier manche 14A dans sa configuration pilotante lorsque le bouton individuel 40 du premier manche 14A est maintenu appuyé même au-delà d'une durée supérieure au seuil de durée. Dans ce mode de réalisation, si le premier manche 14A est dans sa configuration non-pilotante, le module de sélection 16 passe le premier manche 14A dans sa configuration pilotante lorsque le bouton individuel 40 du premier manche 14A est appuyé par le premier pilote et maintient le premier manche 14A dans sa configuration pilotante tant que le bouton individuel 40 du premier manche 14A est maintenu appuyé. Lorsque ledit bouton individuel 40 est relâché, le module de sélection 16 passe le premier manche 14A dans sa configuration non-pilotante.

Selon ce mode de réalisation, le module de sélection 16 ne maintient pas le deuxième manche 14B dans sa configuration pilotante lorsque le bouton individuel 40 du deuxième manche 14B est maintenu appuyé même au-delà d'une durée supérieure au seuil de durée. Dans ce mode de réalisation, si le deuxième manche 14B est dans sa configuration non-pilotante, le module de sélection 16 passe le deuxième manche 14B dans sa configuration pilotante lorsque le bouton individuel 40 du deuxième manche 14B est appuyé par le deuxième pilote et maintient le deuxième manche 14B dans sa configuration pilotante tant que le bouton individuel 40 du deuxième manche 14B est maintenu appuyé. Lorsque ledit bouton individuel 40 est relâché, le module de sélection 16 passe le deuxième manche 14B dans sa configuration non-pilotante.

Selon ce mode de réalisation, si le premier pilote veut être le « pilote en fonction » temporairement, par exemple lors d'une certaine période de temps, il maintient le bouton individuel 40 du premier manche 14A appuyé pendant un temps égal à ladite période de temps.

Selon un autre mode de réalisation, le module de sélection 16 est configuré pour basculer et maintenir le premier manche 14A dans sa configuration pilotante dès lors que le bouton individuel 40 du premier manche 14A est appuyé par le premier pilote.

Selon ce mode de réalisation, si le premier pilote veut être le « pilote en fonction » pour une durée indéterminée, il appuie le bouton individuel 40 du premier manche 14A sans avoir besoin de maintenir ledit bouton individuel 40 appuyé.

Selon un autre mode de réalisation, le vibreur de chaque élément d'indication individuel haptique est, par exemple, en outre, configuré pour émettre une vibration lors du passage du manche 14A, 14B associé depuis la configuration non-pilotante vers la configuration pilotante. Cette vibration indique au pilote maître du manche 14A, 14B associé que la configuration de son manche 14A, 14B a été modifiée. Le pilote maître du manche 14A, 14B sait alors que la configuration de son manche est désormais pilotante si elle était auparavant non-pilotante et qu'elle est désormais non-pilotante si elle était auparavant pilotante.

Grâce au dispositif de pilotage selon l'invention, la répartition des rôles entre le « pilote en fonction » et le « pilote non en fonction » est claire au sein du cockpit.

En outre, la conscience de la situation de l'aéronef pour chacun des pilotes est améliorée. En effet, bien que le « pilote non en fonction » ne puisse pas commander l'aéronef, il peut analyser aisément, par l'intermédiaire de son propre manche, les commandes effectuées par le « pilote en fonction ».

## Revendications

1. Dispositif de pilotage (10) d'un aéronef comprenant un premier manche (14A) et un deuxième manche (14B) montés chacun sur un support (12A ; 12B), chaque manche (14A ; 14B) étant déplaçable par rapport au support (12A ; 12B) entre une pluralité de positions autour d'une position neutre selon au moins un degré de liberté, chaque manche (14A ; 14B) étant configurable entre une configuration pilotante dans laquelle ledit manche (14A ; 14B) est apte à piloter l'aéronef en envoyant une commande de trajectoire à une centrale de pilotage et une configuration non-pilotante dans laquelle aucune commande de trajectoire provenant dudit manche (14A ; 14B) n'est prise en compte par la centrale de pilotage,
le dispositif de pilotage (10) comprenant, en outre, un module (16) de sélection de priorité configuré pour basculer le premier manche (14A) entre la configuration pilotante et la configuration non-pilotante, le module de sélection (16) étant configuré pour basculer le deuxième manche (14B) en configuration non-pilotante lorsque le premier manche (14A) est en configuration pilotante et en configuration pilotante lorsque le premier manche (14A) est en configuration non-pilotante,
le dispositif de pilotage (10) comprenant en outre :
- un système (18) de détection de la position du premier manche (14A) et de la position du deuxième manche (14B) ;
- un premier système d'actionnement (20A) configuré pour engendrer une première force sur le premier manche (14A) selon le degré de liberté ; et
- un deuxième système d'actionnement (20B) configuré pour engendrer une deuxième force sur le deuxième manche (14B) selon le degré de liberté ;
le dispositif de pilotage (10) étant **caractérisé en ce qu'**il comprend en outre un module de commande (22) configuré pour commander le système d'actionnement (20A ; 20B) du manche (14A ; 14B) en configuration non-pilotante de sorte que la position dudit manche (14A ; 14B) en configuration non-pilotante et la position du manche (14A ; 14B) en configuration pilotante soient identiques.

2. Dispositif de pilotage (10) selon la revendication 1, comprenant au moins un système (24) de contrôle du module de sélection (16), le système de contrôle (24) étant configuré pour être actionné par un pilote pour contrôler le module de sélection (16) de sorte à basculer le premier manche (14A) entre la configuration pilotante et la configuration non-pilotante.

3. Dispositif de pilotage (10) selon la revendication 2, dans lequel le système de contrôle (24) comprend un élément de contrôle commun (30), configuré pour être placé sur un panneau de contrôle (6) d'un cockpit (1) de l'aéronef.

4. Dispositif de pilotage (10) selon la revendication 3, dans lequel l'élément de contrôle commun (30) est un bouton commun (36), le module de sélection (16) étant configuré pour changer la configuration du premier manche (14A) depuis l'une entre sa configuration pilotante et sa configuration non-pilotante vers l'autre lorsque le bouton commun (36) est sélectionné par un pilote.

5. Dispositif de pilotage (10) selon l'une quelconque des revendications 2 à 4, dans lequel le système de contrôle (24) comprend, en outre, au moins deux éléments de contrôle individuels (32), chaque manche (14A ; 14B) comprenant un élément de contrôle individuel (32).

6. Dispositif de pilotage (10) selon la revendication 5, dans lequel chaque élément de contrôle individuel (32) est un bouton individuel (40), le module de sélection (16) étant configuré pour passer le premier manche (14A) dans sa configuration pilotante lorsque le bouton individuel (40) du premier manche (14A) est sélectionné par un pilote.

7. Dispositif de pilotage (10) selon la revendication 6, dans lequel le module de sélection (16) est configuré pour passer le premier manche (14A) dans sa configuration pilotante lorsque le bouton individuel (40) du premier manche (14A) est maintenu appuyé par un pilote, le module de sélection (16) étant, en outre, configuré pour passer le premier manche (14A) dans sa configuration non-pilotante lorsque le bouton individuel (40) du premier manche (14A) est relâché.

8. Dispositif de pilotage (10) selon la revendication 6, dans lequel, lorsque le bouton individuel (40) du premier manche (14A) est maintenu appuyé par un pilote lors d'une durée supérieure à un seuil de durée, le module de sélection (16) maintient le premier manche (14A) dans sa configuration pilotante.

9. Dispositif de pilotage (10) selon l'une quelconque des revendications précédentes, comprenant un système (26) d'indication de priorité configuré pour émettre un signal représentatif de la configuration d'au moins un manche (14A ; 14B) parmi le premier manche (14A) et le deuxième manche (14B) et dans lequel, éventuellement, le système d'indication (26) comprend au moins un voyant lumineux (50 ; 52), le signal étant un signal lumineux visible par un pilote et indiquant la configuration actuelle d'au moins un manche (14A ; 14B) parmi le premier manche (14A) et le deuxième manche (14B).

10. Dispositif de pilotage (10) selon la revendication 9, dans lequel le système d'indication (26) comprend, en outre, un vibreur, le signal étant une vibration sensible par un pilote et indiquant que la configuration de chaque manche (14A ; 14B) a été changée.

11. Procédé de pilotage d'un aéronef à l'aide d'un dispositif de pilotage (10) selon l'une quelconque des revendications 1 à 10, le procédé comprenant les étapes de :
- configuration du premier manche (14A) dans la configuration pilotante et du deuxième manche (14B) dans la configuration non-pilotante par le module de sélection (16),
- déplacement du premier manche (14A) selon le degré de liberté par un pilote,
- commande du deuxième système d'actionnement (20B) par le module de commande (22) pour engendrer une deuxième force sur le deuxième manche (14B) selon le degré de liberté de sorte que la position du deuxième manche (14B) et la position du premier manche (14A) soient identiques.

12. Procédé de pilotage selon la revendication 11, le dispositif de pilotage (10) comprenant au moins un système (24) de contrôle du module de sélection (16), le système de contrôle (24) étant configuré pour être actionné par un pilote pour contrôler le module de sélection (16) de sorte à basculer le premier manche (14A) entre la configuration pilotante et la configuration non-pilotante, le procédé comprenant une étape préalable d'actionnement du système de contrôle (24) par un pilote pour passer le premier manche (14A) en configuration pilotante et le deuxième manche (14B) en configuration non-pilotante.

13. Procédé de pilotage selon la revendication 12, dans lequel le système de contrôle (24) comprend un élément de contrôle commun (30), l'élément de contrôle commun (30) étant un bouton commun (36), le module de sélection (16) passant le premier manche (14A) depuis l'une entre sa configuration pilotante et sa configuration non-pilotante vers l'autre lorsque le bouton commun (36) est sélectionné par un pilote.

14. Procédé de pilotage selon la revendication 12 ou 13, dans lequel le système de contrôle (24) comprend au moins deux éléments de contrôle individuels (32), chaque manche (14A ; 14B) comprenant un élément de contrôle individuel (32), chaque élément de contrôle individuel (32) étant un bouton individuel (40), le module de sélection (16) passant le premier manche (14A) dans sa configuration pilotante lorsque le bouton individuel (40) du premier manche (14A) est maintenu appuyé par un pilote, le module de sélection (16) passant le premier manche (14A) dans sa configuration non-pilotante lorsque le bouton individuel (40) du premier manche (14A) est relâché.

15. Procédé de pilotage selon la revendication 12 ou 13, dans lequel le système de contrôle (24) comprend au moins deux éléments de contrôle individuels (32), chaque manche (14A ; 14B) comprenant un élément de contrôle individuel (32), chaque élément de contrôle individuel (32) étant un bouton individuel (40), le module de sélection (16) passant le premier manche (14A) dans sa configuration pilotante lorsque le bouton individuel (40) du premier manche (14A) est maintenu appuyé par un pilote lors d'une durée supérieure à un seuil de durée.

## Patentansprüche

1. Vorrichtung (10) zur Flugsteuerung eines Luftfahrzeugs, umfassend einen ersten Steuerknüppel (14A) und einen zweiten Steuerknüppel (14B), die jeweils auf einem Träger (12A; 12B) montiert sind, wobei jeder Steuerknüppel (14A; 14B) zwischen einer Vielzahl von Positionen um eine neutrale Position herum gemäß mindestens einem Freiheitsgrad in Bezug auf den Träger (12A; 12B) verstellbar ist, wobei jeder Steuerknüppel (14A; 14B) zwischen einer pilotierenden Konfiguration, in der der Steuerknüppel (14A; 14B) das Luftfahrzeug durch Senden eines Flugbahnbefehls an eine Steuerzentrale steuern kann, und einer nicht pilotierenden Konfiguration, in der kein von dem Steuerknüppel (14A; 14B) stammender Bahnbefehl von der Steuerzentrale berücksichtigt wird, konfigurierbar ist,
die Flugsteuervorrichtung (10) ferner umfassend ein Modul (16) zur Prioritätsauswahl, das konfiguriert ist, um den ersten Steuerknüppel (14A) zwischen der pilotierenden Konfiguration und der nicht pilotierenden Konfiguration umzuschalten, wobei das Auswahlmodul (16) konfiguriert ist, um den zweiten Steuerknüppel (14B) in die nicht pilotierende Konfiguration umzuschalten, wenn der erste Steuerknüppel (14A) in der pilotierenden Konfiguration ist, und in die pilotierende Konfiguration umzuschalten, wenn der erste Steuerknüppel (14A) in der nicht pilotierenden Konfiguration ist,
die Flugsteuervorrichtung (10) ferner umfassend:
- ein System (18) zum Erfassen der Position des ersten Steuerknüppels (14A) und der Position des zweiten Steuerknüppels (14B);
- ein erstes Betätigungssystem (20A), das konfiguriert ist, um gemäß dem Freiheitsgrad eine erste Kraft auf den ersten Steuerknüppel (14A) auszuüben; und
- ein zweites Betätigungssystem (20B), das konfiguriert ist, um gemäß dem Freiheitsgrad eine zweite Kraft auf den zweiten Steuerknüppel (14B) auszuüben;
wobei die Flugsteuervorrichtung (10) **dadurch gekennzeichnet ist, dass** sie ferner ein Steuermodul (22) umfasst, das konfiguriert ist, um das Betätigungssystem (20A; 20B) des Steuerknüppels (14A; 14B) in einer nicht pilotierenden Konfiguration zu steuern, sodass die Position des Steuerknüppels (14A; 14B) in der nicht pilotierenden Konfiguration und die Position des Steuerknüppels (14A; 14B) in der pilotierenden Konfiguration identisch sind.

2. Flugsteuervorrichtung (10) nach Anspruch 1, mindestens umfassend ein System (24) zur Steuerung des Auswahlmoduls (16), wobei das Steuersystem (24) konfiguriert ist, um von einem Piloten betätigt zu werden, um das Auswahlmodul (16) zu steuern, um den ersten Steuerknüppel (14A) zwischen der pilotierenden Konfiguration und der nicht pilotierenden Konfiguration umzuschalten.

3. Flugsteuervorrichtung (10) nach Anspruch 2, wobei das Steuersystem (24) ein gemeinsames Steuerelement (30) umfasst, das konfiguriert ist, um auf einer Steuertafel (6) eines Cockpits (1) des Luftfahrzeugs angeordnet zu sein.

4. Flugsteuervorrichtung (10) nach Anspruch 3, wobei das gemeinsame Steuerelement (30) eine gemeinsame Taste (36) ist, wobei das Auswahlmodul (16) konfiguriert ist, um die Konfiguration des ersten Steuerknüppels (14A) von einer seiner pilotierenden Konfiguration oder seiner nicht pilotierenden Konfiguration in die andere zu ändern, wenn die gemeinsame Taste (36) von einem Piloten ausgewählt wird.

5. Flugsteuervorrichtung (10) nach einem der Ansprüche 2 bis 4, wobei das Steuersystem (24) ferner mindestens zwei individuelle Steuerelemente (32) umfasst, jeder Steuerknüppel (14A; 14B) umfassend ein individuelles Steuerelement (32).

6. Flugsteuervorrichtung (10) nach Anspruch 5, wobei jedes individuelle Steuerelement (32) eine individuelle Taste (40) ist, wobei das Auswahlmodul (16) konfiguriert ist, um den ersten Steuerknüppel (14A) in seine pilotierende Konfiguration umzuschalten, wenn die individuelle Taste (40) des ersten Steuerknüppels (14A) von einem Piloten ausgewählt wird.

7. Flugsteuervorrichtung (10) nach Anspruch 6, wobei das Auswahlmodul (16) konfiguriert ist, um den ersten Steuerknüppel (14A) in seine pilotierenden Konfiguration umzuschalten, wenn die einzelne Taste (40) des ersten Steuerknüppels (14A) durch einen Piloten gedrückt gehalten wird, wobei das Auswahlmodul (16) ferner konfiguriert ist, um den ersten Steuerknüppel (14A) in seine nicht pilotierende Konfiguration umzuschalten, wenn die einzelne Taste (40) des ersten Steuerknüppels (14A) losgelassen wird.

8. Flugsteuervorrichtung (10) nach Anspruch 6, wobei das Auswahlmodul (16) den ersten Steuerknüppel (14A) in seiner pilotierenden Konfiguration hält, wenn die individuelle Taste (40) des ersten Steuerknüppels (14A) von einem Piloten während einer Zeitdauer gedrückt gehalten wird, die größer ist als ein Zeitschwellenwert.

9. Flugsteuervorrichtung (10) nach einem der vorherigen Ansprüche, umfassend ein System (26) zur Prioritätsanzeige, das konfiguriert ist, um ein Signal auszugeben, das repräsentativ für die Konfiguration mindestens eines Steuerknüppels (14A; 14B) von dem ersten Steuerknüppel (14A) und dem zweiten Steuerknüppel (14B) ist, und wobei optional das Anzeigesystem (26) mindestens eine Leuchtanzeige (50; 52) umfasst, wobei das Signal ein Leuchtsignal ist, das für einen Piloten sichtbar ist und die aktuelle Konfiguration des mindestens einen Steuerknüppels (14A; 14B) von dem ersten Steuerknüppel (14A) und dem zweiten Steuerknüppel (14B) angibt.

10. Flugsteuervorrichtung (10) nach Anspruch 9, wobei das Anzeigesystem (26) ferner eine Vibrationseinrichtung umfasst, wobei das Signal eine Vibration ist, die von einem Piloten wahrgenommen wird und angibt, dass die Konfiguration von jedem Steuerknüppel (14A; 14B) geändert wurde.

11. Flugsteuerverfahren eines Luftfahrzeugs mittels einer Flugsteuervorrichtung (10) nach einem der Ansprüche 1 bis 10, das Verfahren umfassend die folgenden Schritte:
- Konfiguration des ersten Steuerknüppels (14A) in die pilotierende Konfiguration und des zweiten Steuerknüppels (14B) in die nicht pilotierende Konfiguration durch das Auswahlmodul (16),
- Verstellen des ersten Steuerknüppels (14A) gemäß dem Freiheitsgrad durch einen Piloten,
- Steuern des zweiten Betätigungssystems (20B) durch das Steuermodul (22), um gemäß dem Freiheitsgrad eine zweite Kraft auf den zweiten Steuerknüppel (14B) auszuüben, sodass die Position des zweiten Steuerknüppels (14B) und die Position des ersten Steuerknüppels (14A) identisch sind.

12. Flugsteuerverfahren nach Anspruch 11, die Flugsteuervorrichtung (10) umfassend mindestens ein System (24) zur Steuerung des Auswahlmoduls (16), wobei das Steuersystem (24) konfiguriert ist, um von einem Piloten betätigt zu werden, um das Auswahlmodul (16) zu steuern, um den ersten Steuerknüppel (14A) zwischen der pilotierenden Konfiguration und der nicht pilotierenden Konfiguration umzuschalten, das Verfahren umfassend einen vorherigen Schritt eines Betätigens des Steuersystems (24) durch einen Piloten, um den ersten Steuerknüppel (14A) in die pilotierende Konfiguration und den zweiten Steuerknüppel (14B) in die nicht pilotierende Konfiguration zu bringen.

13. Flugsteuerverfahren nach Anspruch 12, wobei das Steuersystem (24) ein gemeinsames Steuerelement (30) umfasst, wobei das gemeinsame Steuerelement (30) eine gemeinsame Taste (36) ist, wobei das Auswahlmodul (16) konfiguriert ist, um den ersten Steuerknüppel (14A) von einer seiner pilotierenden Konfiguration oder seiner nicht pilotierenden Konfiguration in die andere zu ändern, wenn die gemeinsame Taste (36) von einem Piloten ausgewählt wird.

14. Flugsteuerverfahren nach Anspruch 12 oder 13, wobei das Steuersystem (24) mindestens zwei individuelle Steuerelemente (32) umfasst, jeder Steuerknüppel (14A; 14B) umfassend ein individuelles Steuerelement (32), wobei jedes individuelle Steuerelement (32) eine individuelle Taste (40) ist, wobei das Auswahlmodul (16) den ersten Steuerknüppel (14A) in seine pilotierende Konfiguration umschaltet, wenn die individuelle Taste (40) des ersten Steuerknüppels (14A) von einem Piloten gedrückt gehalten wird, wobei das Auswahlmodul (16) den ersten Steuerknüppel (14A) in seine nicht pilotierende Konfiguration umschaltet, wenn die individuelle Taste (40) des ersten Steuerknüppels (14A) losgelassen wird.

15. Flugsteuerverfahren nach Anspruch 12 oder 13, wobei das Steuersystem (24) mindestens zwei individuelle Steuerelemente (32) umfasst, jeder Steuerknüppel (14A; 14B) umfassend ein individuelles Steuerelement (32), wobei jedes Steuerelement (32) eine individuelle Taste (40) ist, wobei das Auswahlmodul (16) den ersten Steuerknüppel (14A) in seine pilotierende Konfiguration umschaltet, wenn die individuelle Taste (40) des ersten Steuerknüppels (14A) von einem Piloten über eine Zeitdauer gedrückt gehalten wird, die größer ist als ein Zeitschwellenwert.

## Claims

1. A piloting device (10) for piloting an aircraft comprising a first control stick (14A) and a second control stick (14B), each mounted on a support (12A; 12B),
each control stick (14A; 14B) being movable in relation to the support (12A; 12B), between a plurality of positions around a neutral position in at least one degree of freedom,
each control stick (14A; 14B) being configurable between a piloting configuration, in which said control stick (14A; 14B) is capable of piloting the aircraft by sending a trajectory command to a control unit, and a non-piloting configuration, in which no trajectory command from said control stick (14A; 14B) is taken into account by the control unit,
the piloting device (10) further comprising a priority selection module (16) configured to switch the first control stick (14A) between the piloting configuration and the non-piloting configuration, the selection module (16) being configured to switch the second control stick (14B) to the non-piloting configuration when the first control stick (14A) is in the piloting configuration and to the piloting configuration when the first control stick (14A) is in the non-piloting configuration,
the piloting device (10) further comprising:
- a detection system (18) for detecting the position of the first control stick (14A) and the position of the second control stick (14B);
- a first actuation system (20A) configured to generate a first force on the first control stick (14A) according to the degree of freedom; and
- a second actuation system (20B) configured to generate a second force on the second control stick (14B) according to the degree of freedom;
the piloting device (10) being **characterized in that** it further comprises a control module (22) configured to control the actuation system (20A; 20B) of the control stick (14A; 14B) which is in the non-piloting configuration, such that the position of said control stick (14A; 14B) in the non-piloting configuration and the position of the control stick (14A; 14B) which is in the piloting configuration are identical.

2. The piloting device (10) according to claim 1, comprising at least one control system (24) for controlling the selection module (16), the control system (24) being configured to be operated by a pilot to control the selection module (16), so as to switch the first control stick (14A) between the piloting configuration and the non-piloting configuration.

3. The piloting device (10) according to claim 2, wherein the control system (24) comprises a shared control element (30), configured to be arranged on a control panel (6) of a cockpit (1) of the aircraft.

4. The piloting device (10) according to claim 3, wherein the shared control element (30) is a shared button (36), the selection module (16) being configured to change the configuration of the first control stick (14A) from either its piloting or non-piloting configuration to the other when the shared button (36) is selected by a pilot.

5. The piloting device (10) according to any one of claims 2 to 4, wherein the control system (24) further comprises at least two individual control elements (32), each control stick (14A; 14B) comprising an individual control element (32).

6. The piloting device (10) according to claim 5, wherein each individual control element (32) is an individual button (40), the selection module (16) being configured to switch the first control stick (14A) to its piloting configuration when the individual button (40) of the first control stick (14A) is selected by a pilot.

7. The piloting device (10) according to claim 6, wherein the selection module (16) is configured to switch the first control stick (14A) to its piloting configuration when the individual button (40) of the first control stick (14A) is held down by a pilot, the selection module (16) being further configured to switch the first control stick (14A) to its non-piloting configuration when the individual button (40) of the first control stick (14A) is released.

8. The piloting device (10) according to claim 6, wherein, when the individual button (40) of the first control stick (14A) is held down by a pilot for a duration greater than a duration threshold, the selection module (16) keeps the first control stick (14A) in its piloting configuration.

9. The piloting device (10) according to any one of the preceding claims, comprising a priority indication system (26) configured to output a signal representative of the configuration of at least one control stick (14A; 14B) among the first control stick (14A) and the second control stick (14B) and wherein, eventually, the indication system (26) comprises at least one indicator light (50; 52), the signal being a light signal visible to the pilot, indicating the current configuration of at least one (14A; 14B) of the first control stick (14A) and the second control stick (14B).

10. The piloting device (10) according to claim 9, wherein the indication system (26) further comprises a vibrator, the signal being a vibration perceptible by a pilot and indicating that the configuration of each control stick (14A; 14B) has been changed.

11. A piloting method for piloting an aircraft using a piloting device (10) according to any one of claims 1 to 10, the method comprising the steps of:
- configuration of the first control stick (14A) in the piloting configuration and of the second control stick (14B) in the non-piloting configuration, by the selection module (16),
- moving of the first control stick (14A) according to the degree of freedom, by a pilot,
- controlling of the second actuation system (20B) by the control module (22), to generate a second force on the second control stick (14B) according to the degree of freedom so that the position of the second control stick (14B) and the position of the first control stick (14A) are identical.

12. The piloting method according to claim 11, the piloting device (10) comprising at least one control system (24) for controlling the selection module (16), the control system (24) being configured to be operated by a pilot to control the selection module (16), so as to switch the first control stick (14A) between the piloting configuration and the non-piloting configuration, the method comprising a prior step of actuating the control system (24) to switch the first control stick (14A) to the piloting configuration and the second control stick (14B) to the non-piloting configuration, said prior step being carried out by a pilot.

13. The piloting method according to claim 12, wherein the control system (24) comprises a shared control element (30), the shared control element (30) being a shared button (36), the selection module (16) switching the first control stick (14A) from either its piloting or its non-piloting configuration to the other when the shared button (36) is selected by a pilot.

14. The piloting method according to claim 12 or 13, wherein the control system (24) comprises at least two individual control elements (32), each control stick (14A; 14B) comprising an individual control element (32), each individual control element (32) being an individual button (40), the selection module (16) switching the first control stick (14A) to its piloting configuration when the individual button (40) of the first control stick (14A) is held down by a pilot, the selection module (16) switching the first control stick (14A) to its non-piloting configuration when the individual button (40) of the first control stick (14A) is released.

15. The piloting method according to claim 12 or 13, wherein the control system (24) comprises at least two individual control elements (32), each control stick (14A; 14B) comprising an individual control element (32), each individual control element (32) being an individual button (40), the selection module (16) switching the first control stick (14A) to its piloting configuration when the individual button (40) of the first control stick (14A) is held down by a pilot for a duration greater than a duration threshold.
